# EUROPEAN PATENT SPECIFICATION

(11) **EP 3 771 663 B1**
(45) Date of publication and mention of the grant of the patent: **12.04.2023**
(21) Application number: 20188103.4
(22) Date of filing: 28.07.2020
(51) Int. Cl.: B65G 17/06, A47J 37/04

(54) **CONVEYOR BELT, CONVEYING APPARATUS AND OVEN FOR BAKING PRODUCTS, IN PARTICULAR FOOD PRODUCTS**
FÖRDERGURT, FÖRDERGERÄT UND OFEN ZUM BACKEN VON PRODUKTEN, INSBESONDERE VON LEBENSMITTELPRODUKTEN
BANDE DE TRANSPORT, APPAREIL DE TRANSPORT ET FOUR POUR PRODUITS DE CUISSON, EN PARTICULIER PRODUITS ALIMENTAIRES

(30) Priority: 31.07.2019 IT 201900013509
(43) Date of publication of application: 03.02.2021
(73) Proprietor: Gea Imaforni S.p.A., 37030 Colognola Ai Colli (VR) (IT)
(72) Inventor: PEROLO, Alessandro, 37124 VERONA (IT)
(74) Representative: Dondi, Silvia

(56) References cited:
- EP-A1- 1 281 641
- EP-A1- 3 290 343
- US-A1- 2011 048 245
- US-A1- 2019 161 279

## Description

The present invention relates to a conveyor belt, a conveying apparatus and an oven for baking products, in particular food products.

The conveyor belt of the present invention has application in particular in the conveyance of food products through a process zone, such as, for example, a tunnel oven for baking products.

A baking tunnel oven consists mainly of two parts: a baking chamber with a respective heating system (usually an irradiation or convection system) and a conveyor belt enabling the transfer of the products to be baked.

A solution of a known type adopted in this sector envisages a jointed metal grid conveyor belt that requires a continuous support of the grid over its whole length in order to prevent it from bending, in other words, collapsing, during motion and failing to maintain the conveyor surface constant. In particular, the conveyor belt of such a solution envisages drag systems and sliding surfaces that require high pulling forces and, consequently, large-sized gearmotors.

It is evident that such a solution brings with it various disadvantages. In particular, the need for continuous support of the mesh and the adoption of drag systems imply large overall dimensions and heaviness of the conveyor belt drive system in order to provide a pulling power that is sufficient to overcome the sliding friction due to dragging. Moreover, because of high friction values, abundant lubrication and continuous maintenance of the drive systems are necessary. In addition, the sliding surfaces used for the whole length of the belt cause a shielding effect that precludes the use of this solution in irradiation heating systems. Document EP 1281641 A1 discloses a drive system for modular link conveyors according to preamble of claim 1.

In this context, the technical task at the basis of the present invention is to provide a conveyor belt, a conveying apparatus and an oven for baking products, in particular food products, which overcome the above-mentioned drawbacks of the prior art.

In particular, it is an object of the present invention to provide a conveyor belt with a support structure that is simplified compared to the known solutions.

A further object of the present invention is to provide a conveying apparatus that is lighter and easier to maintain and has smaller overall dimensions than the known solutions.

The stated technical task and specified objects are substantially achieved by a conveyor belt according to claim 1.

In accordance with a preferred embodiment, the conveyor belt comprises more than two chains, substantially parallel to each other and to the conveying direction.

Preferably, the chains are equidistant, that is, arranged at regular pitches. For example, the pitch between two adjacent chains is comprised between 300 mm and 500 mm.

Each chain comprises plates of a first type and plates of a second type alternately hinged together.

The mechanical stop means are distributed on the plates of the first type, whilst each plate of the second type has end abutting elements which, in the predefined limit position, abut the mechanical stop means of the two plates of the first type adjacent to the plate of the second type.

In accordance with one embodiment, the mechanical stop means consist of protrusions obtained on each plate of the first type.

Preferably, the protrusions are two for each plate of the first type and are located in proximity to opposite ends of the plate of the first type.

For example, the protrusions are tabs having an inclination comprised between 90° and 120° with respect to the corresponding plate of the first type.

In accordance with another embodiment, the mechanical stop means are pins inserted in corresponding through-holes obtained in the plates of the first type.

Preferably, the pins are two for each plate of the first type and are inserted respectively in two through-holes obtained in proximity to opposite ends of the plate of the first type.

Preferably, the grid is made of metallic material.

Preferably, the grid is of the eyelink type.

The stated technical task and specified objects are substantially achieved by a conveying apparatus for conveying products through a process zone, comprising:
- the conveyor belt in accordance with the present invention;
- motorised means operatively active on the conveyor belt for moving it in such a way that the products move forward along the conveying direction;
- a plurality of supporting rollers positioned below the conveyor belt for supporting it, the supporting rollers being parallel to each other and substantially perpendicular to the conveying direction.

In particular, the supporting rollers are equidistant.

The stated technical task and specified objects are substantially achieved by an oven for baking products, in particular food products, comprising:
- a baking chamber which defines a process zone for the products, heating elements being present in the baking chamber;
- the conveying apparatus according to the present invention, which is arranged in such a way that it goes at least partially through the baking chamber.

In particular, the heating elements are radiators and/or blowers.

Additional features and advantages of the present invention will be more apparent from the approximate and thus non-limiting description of a preferred but non-exclusive embodiment of a conveyor belt, a conveying apparatus and an oven for baking products, in particular food products, as illustrated in the accompanying drawings, in which:

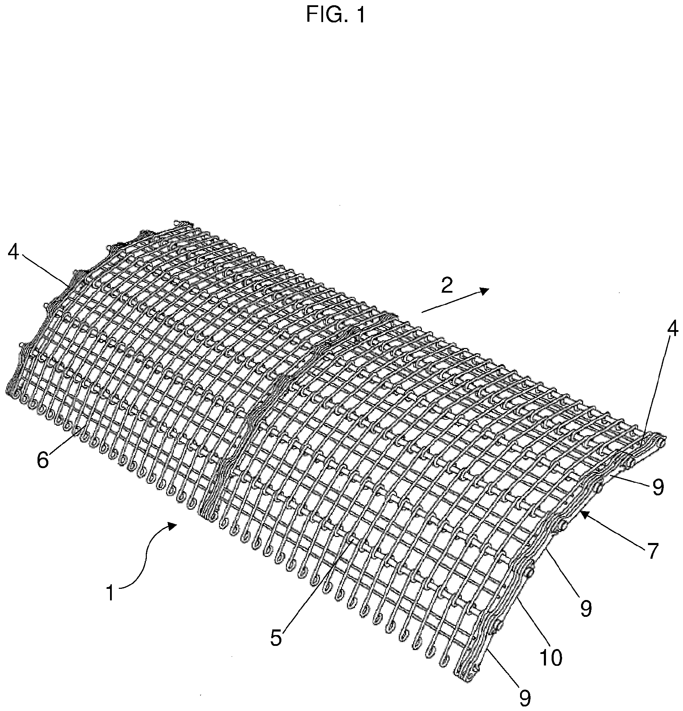

- figure 1 illustrates a conveyor belt in accordance with a first embodiment, according to the present invention, in a perspective view;

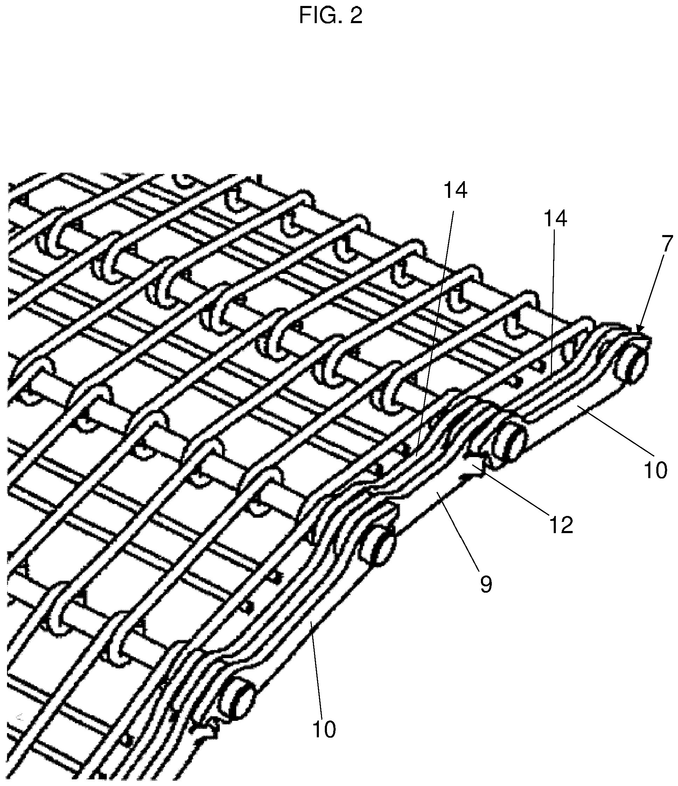

- figure 2 illustrates an enlarged portion of the conveyor belt of figure 1, in a perspective view;
- figures 3a-3b illustrate a first type of plate used in the conveyor belt of figure 1, in a front view and plan view, respectively;
- figure 4 illustrates a detail (tab) of the plate of the first type of figures 3a-3b, in a top view;
- figure 5 illustrates a second type of plate used in the conveyor belt of figure 1, in a front view;
- figure 6 illustrates a portion of an edge chain of the conveyor belt of figure 1, in a front view;
- figure 7 illustrates a second embodiment of a portion of an edge chain, in a perspective view;

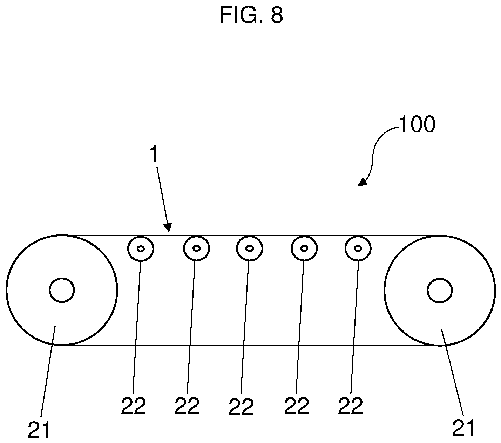

- figure 8 illustrates a conveying apparatus according to the present invention, in a schematic view.

With reference to the figures, the number 1 indicates a conveyor belt for conveying products along a conveying direction 2.

In particular, the conveyor belt 1 is used to convey food products, for example bakery or pastry products.

The conveyor belt 1 comprises a grid 3 mainly extending along a direction parallel to the conveying direction 2. The grid 3 comprises:
- two longitudinal edges 4, in particular parallel to the conveying direction 2;
- a plurality of rods 5 parallel to each other and substantially perpendicular to the conveying direction 2;
- a plurality of wires 6 twisted around the rods 5 in such a way as to define meshes of the grid.

The grid 3 is preferably made of metallic material, for example steel.

In particular, each of the wires 6 of the grid 3 has its ends bent over so as to form eyes around two rods 5. In the sector, grids of this type are called "eyelink" conveyor belts.

The conveyor belt 1 further comprises at least two chains 7, each of which is arranged at one of the two longitudinal edges 4 of the grid 3.

In particular, the conveyor belt 1 comprises a plurality of chains 7, two of which are at the two longitudinal edges 4 of the grid 3 (for the sake of clarity they will be indicated as "edge chains"), whereas the other chain or chains 7 are substantially parallel to the edge chains and are arranged along the grid 3 (for the sake of clarity they will be indicated as "intermediate chains"). The intermediate chains 7 are preferably inserted into the grid 3 at regular pitches in relation to the width of the conveyor belt 1.

For example, the pitch between one chain and another is comprised between 300 mm and 500 mm.

Originally, each chain 7 (edge or intermediate chain) comprises a plurality of plates 9, 10 hinged together and mechanical stop means 8 distributed along the chain 7 in such a way as to prevent the mutual rotation of consecutive plates 9, 10 beyond a predefined limit position.

Preferably, each plate 9,10 has a flat, elongate shape.

Each chain 7 comprises plates of a first type 9 and plates of a second type 10 alternately arranged along said chain 7.

In other words, every plate of the first type 9 is hinged to two plates of the second type 10.

The mechanical stop means 8 are distributed on the plates of the first type 9.

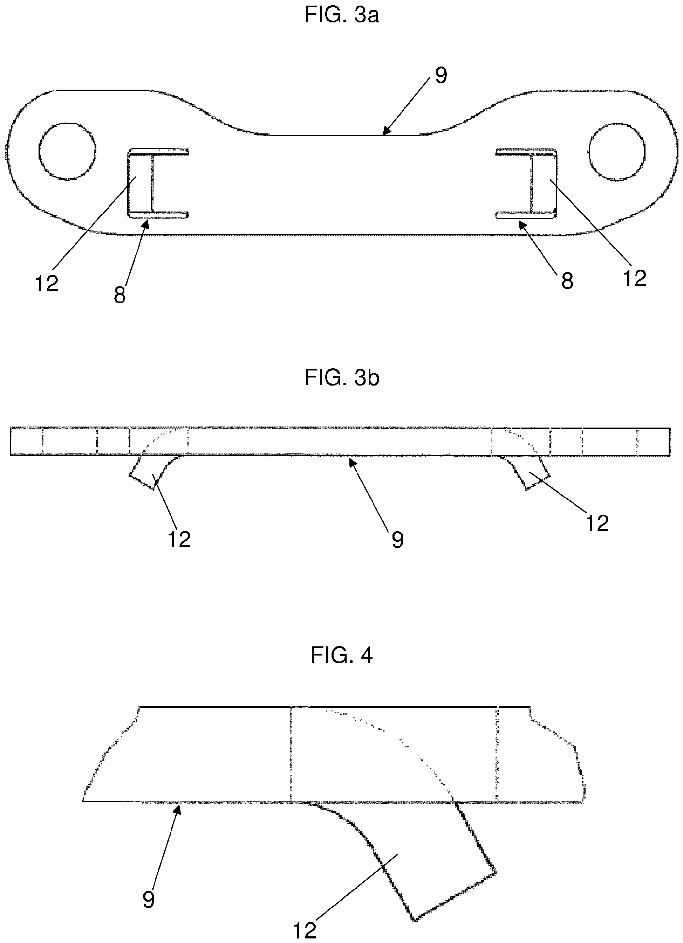

In a first embodiment, illustrated in figures 3a-3b, the mechanical stop means 8 consist of protrusions 12 obtained on each plate of the first type 9.

Preferably, each plate of the first type 9 has two protrusions 12 located in proximity to opposite ends of the plate 9.

For example, the protrusions 12 are tabs having an inclination comprised between 90° and 120° with respect to the corresponding plate 9.

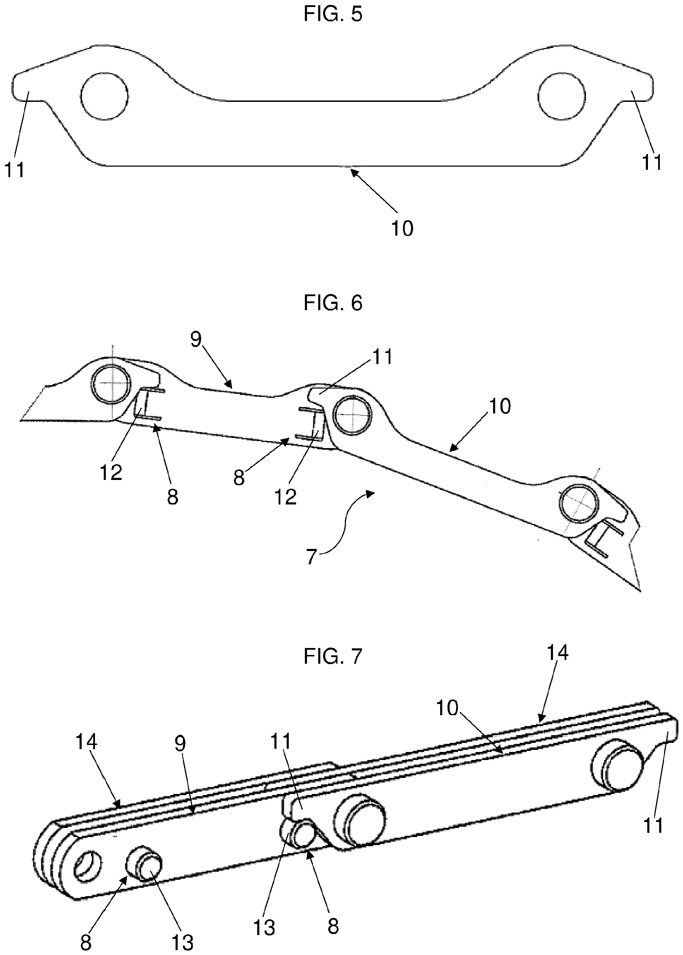

In a second embodiment, illustrated in figure 7, the mechanical stop means 8 are pins 13 inserted in corresponding through-holes obtained in the plates of the first type 9.

Preferably, each plate of the first type 9 has two through-holes obtained in proximity to opposite ends. A pin 13 is inserted into every through-hole.

Each plate of the second type 10 has end abutting elements 11 which, in the predefined limit position, abut the mechanical stop means 8 of the two adjacent plates of the first type 9. See in particular figure 6 (referring to the first embodiment of the plates of the first type 9) and figure 7 (referring to the second embodiment of the plates of the first type 9).

As already defined above, the predefined limit position is understood as the position beyond which two plates of a different type hinged together (a plate of the first type 9 and a plate of the second type 10) can rotate no further. In other words, the protrusion 12 or the pin 13 constitutes a limit stop for the mutual rotation of the plates 9, 10 hinged together.

Preferably, each chain 7 further comprises a plurality of plates of a known type 14 interposed between each plate 9, 10 and the grid 3 so as to reinforce the corresponding chain 7.

The conveyor belt 1 can further comprise dividing elements (of a known type) mounted on the grid 3 parallel to the rods 5 so as to separate products of different types.

The conveyor belt 1 can also comprise side panels mounted along the longitudinal edges 4 to prevent products from falling off the side of the conveyor belt 1.

A conveying apparatus for conveying products through a process zone has been indicated with the number 100. The conveying apparatus 100 comprises:
- the conveyor belt 1;
- motorised means 21 operatively active on the conveyor belt 1 for moving it in such a way that the products move forward along the conveying direction 2;
- a plurality of supporting rollers 22 positioned below the conveyor belt 1 for supporting it during its movement.

In particular, the supporting rollers 22 are parallel to each other and substantially perpendicular to the conveying direction 2.

Preferably, the supporting rollers 22 are equidistant. For example, the pitch between two neighbouring supporting rollers 22 is comprised between 500 mm and 1500 mm.

In particular, the motorised means 21 comprise:
- two parallel rollers arranged according to a direction that is substantially perpendicular to the conveying direction 2 of the conveyor belt 1, on which the conveyor belt 1 is slidably mounted;
- an electric motor (not illustrated) for driving one of the two rollers.

The conveying apparatus 100 may be used inside an oven, for example for baking food products (e.g. biscuits, snacks, etc.).

The oven (not illustrated) comprises a baking chamber which defines a process zone in which the food products are baked.

The baking chamber has one or more heating elements inside it. For example, the heating elements are radiators for heating by irradiation. Alternatively or in addition, the heating elements are blowers for heating by convection.

The conveying apparatus 100 is arranged in such a way as to at least partially pass through the baking chamber.

Preferably, the oven is completely passed through by the conveying apparatus (in the sector it is known as a tunnel oven).

Preferably, a feed unit for feeding products to be baked is positioned upstream of the oven and a unit for picking up the baked products is positioned downstream thereof.

The operation of the conveying apparatus and of the oven for baking products, in particular food products, according to the present invention, is described below.

The products to be baked are fed by the feed unit onto the conveyor belt 1 of the conveying apparatus 100. The motorised means 21 move the conveyor belt 1, which brings the products through the process zone (baking chamber).

The radiators and/or blowers installed in the baking chamber bake the products by irradiation and/or convection. The baked products exiting the baking apparatus are carried by the conveyor belt 1 to a unit for picking up the baked products.

From the description given, the features of the conveyor belt, of the conveying apparatus and of the oven for baking products, in particular food products, according to the present invention, are clear, as are the advantages thereof.

In particular, by virtue of the provision of mechanical stop means along the chains, the conveyor belt is self-bearing, i.e. the meshes of the grid do not bend.

In the known solutions, by contrast, a partial hinge rotation of the belt occurred, which imposed the use of drag systems to keep the belt flat and sliding smoothly.

It is thus possible to rely on simplified support systems, abandoning sliding surfaces and relying on the use of supporting rollers with a pitch varying between 500 mm and 1500 mm so as to assure and keep the conveyor belt flat and sliding smoothly also with loads of between 10 and 80 kg/m². This also means a reduced coefficient of friction between the conveyor belt and the support compared to the known solutions, with a consequent reduction in the required pulling power and simplification of the systems for moving the conveying apparatus.

Based on what has been said, the proposed conveying apparatus is lighter and easier to maintain and has smaller overall dimensions compared to the known solutions.

Furthermore, thanks to the replacement of sliding surfaces with supporting rollers, it is possible to use systems for heating by irradiation and ensure uniformity in the distribution of heat to the conveyed products, with a consequent uniformity of baking, which the consumer notices immediately from the uniformity of the colour of the products.

## Claims

1. Conveyor belt (1) for conveying products along a conveying direction (2), comprising:
- a grid (3) mainly extending along a direction parallel to said conveying direction (2), said grid (3) comprising two longitudinal edges (4), a plurality of rods (5) parallel to each other and substantially perpendicular to said conveying direction (2) and a plurality of wires (6) twisted around said rods (5) in such a way as to define meshes of the grid (3);
- at least two chains (7), each of which is arranged at one of the two longitudinal edges (4) of the grid (3), each chain (7) comprising:
- a plurality of plates (9, 10) hinged together;
- mechanical stop means (8) distributed along said chain (7) in such a way as to prevent the mutual rotation of consecutive plates (9,10) beyond a predefined limit position,
**characterised in that** each chain (7) comprises plates of a first type (9) and plates of a second type (10) alternately hinged together, said mechanical stop means (8) being distributed on the plates of the first type (9), each plate of the second type (10) having end abutting elements (11) which in said predefined limit position abut said mechanical stop means (8) of the two plates of the first type (9) adjacent to said plate of the second type (10).

2. Conveyor belt (1) according to claim 1, comprising more than two chains (7), substantially parallel to each other and to said conveying direction (2).

3. Conveyor belt (1) according to claim 2, wherein said chains (7) are equidistant, that is, they are arranged at regular pitches.

4. Conveyor belt (1) according to claim 3, wherein the pitch between two adjacent chains (7) is between 300 mm and 500 mm.

5. Conveyor belt (1) according to claim 1, wherein said mechanical stop means (8) consist of protrusions (12) obtained on each plate of the first type (9).

6. Conveyor belt (1) according to claim 5, wherein said protrusions (12) are two for each plate of the first type (9) and are located in proximity to opposite ends of said plate of the first type (9).

7. Conveyor belt (1) according to claim 5 or 6, wherein said protrusions (12) are tabs having an inclination comprised between 90° and 120° with respect to the corresponding plate of the first type (9).

8. Conveyor belt (1) according to claim 1, wherein said mechanical stop means (8) are pins (13) inserted in corresponding through-holes obtained in said plates of the first type (9).

9. Conveyor belt (1) according to claim 8, wherein said pins (13) are two for each plate of the first type (9) and are inserted respectively in two through-holes obtained in proximity to opposite ends of said plate of the first type (9).

10. Conveyor belt (1) according to any of the preceding claims, wherein said grid (3) is made of metallic material.

11. Conveyor belt (1) according to any of the preceding claims, wherein said grid (3) is of the eyelink type.

12. Conveying apparatus (100) for conveying products through a process zone, comprising:
- a conveyor belt (1) according to any of the preceding claims;
- motorised means (21) operatively active on said conveyor belt (1) for moving it in such a way that the products move forward along said conveying direction (2);
- a plurality of supporting rollers (22) positioned below the conveyor belt (1) for supporting it, said supporting rollers (22) being parallel to each other and substantially perpendicular to the conveying direction (2).

13. Conveying apparatus (100) according to claim 12, wherein said supporting rollers (22) are equidistant.

14. Oven for baking products, in particular food products, comprising:
- a baking chamber which defines a process zone for the products, heating elements being present in said baking chamber;
- a conveying apparatus (100) according to claim 12 or 13, arranged in such a way that it goes at least partially through said baking chamber.

15. Oven according to claim 14, wherein said heating elements are radiators and/or blowers.

## Patentansprüche

1. Fördergurt (1) zum Fördern von Produkten entlang einer Förderrichtung (2), umfassend:
- ein Gitter (3), das sich hauptsächlich entlang einer Richtung parallel zu der Förderrichtung (2) erstreckt, wobei das Gitter (3) zwei Längskanten (4), eine Vielzahl von Stäben (5), die parallel zueinander und im Wesentlichen senkrecht zu der Förderrichtung (2) verlaufen, und eine Vielzahl von Drähten (6) umfasst, die um die Stäbe (5) derart verdrillt sind, dass sie Maschen des Gitters (3) definieren;
- mindestens zwei Ketten (7), von denen eine jede an einer der beiden Längskanten (4) des Gitters (3) angeordnet ist, wobei eine jede Kette (7) Folgendes umfasst:
- eine Vielzahl von Platten (9, 10), die gelenkig miteinander verbunden sind;
- mechanische Arretiermittel (8), die entlang der Kette (7) derart verteilt sind, dass sie die gegenseitige Drehung aufeinanderfolgender Platten (9,10) über eine vorbestimmte Grenzposition hinaus verhindern,
**dadurch gekennzeichnet, dass** eine jede Kette (7) Platten eines ersten Typs (9) und Platten eines zweiten Typs (10) umfasst, die abwechselnd gelenkig miteinander verbunden sind, wobei die mechanischen Arretiermittel (8) auf den Platten des ersten Typs (9) verteilt sind, wobei eine jede Platte des zweiten Typs (10) Endanschlagelemente (11) aufweist, die in der vorbestimmten Grenzposition an den mechanischen Arretiermitteln (8) der beiden Platten des ersten Typs (9) anliegen, die an die Platte des zweiten Typs (10) angrenzen.

2. Fördergurt (1) nach Anspruch 1, umfassend mehr als zwei Ketten (7), die im Wesentlichen parallel zueinander und zu der Förderrichtung (2) verlaufen.

3. Fördergurt (1) nach Anspruch 2, wobei die Ketten (7) äquidistant sind, das heißt, sie sind in regelmäßigen Abständen angeordnet.

4. Fördergurt (1) nach Anspruch 3, wobei der Abstand zwischen zwei benachbarten Ketten (7) zwischen 300 mm und 500 mm beträgt.

5. Fördergurt (1) nach Anspruch 1, wobei die mechanischen Arretiermittel (8) aus Vorsprüngen (12) bestehen, die auf einer jeden Platte des ersten Typs (9) erhalten sind.

6. Fördergurt (1) nach Anspruch 5, wobei die Vorsprünge (12) zwei für eine jede Platte des ersten Typs (9) sind und in der Nähe gegenüberliegender Enden der Platte des ersten Typs (9) angeordnet sind.

7. Fördergurt (1) nach Anspruch 5 oder 6, wobei die Vorsprünge (12) Laschen sind, die eine Neigung zwischen 90° und 120° in Bezug auf die entsprechende Platte des ersten Typs (9) aufweisen.

8. Fördergurt (1) nach Anspruch 1, wobei die mechanischen Arretiermittel (8) Stifte (13) sind, die in entsprechende Durchgangslöcher eingesetzt sind, die in den Platten des ersten Typs (9) erhalten sind.

9. Fördergurt (1) nach Anspruch 8, wobei die Stifte (13) zwei für eine jede Platte des ersten Typs (9) sind und jeweils in zwei Durchgangslöchern eingesetzt sind, die in der Nähe gegenüberliegender Enden der Platte des ersten Typs (9) erhalten sind.

10. Fördergurt (1) nach einem der vorhergehenden Ansprüche, wobei das Gitter (3) aus metallischem Material hergestellt ist.

11. Fördergurt (1) nach einem der vorhergehenden Ansprüche, wobei das Gitter (3) vom Drahtösentyp ist.

12. Fördergerät (100) zum Fördern von Produkten durch eine Prozesszone, umfassend:
- ein Fördergurt (1) nach einem der vorhergehenden Ansprüche;
- motorisierte Mittel (21), die auf dem Fördergurt (1) betriebswirksam sind, um ihn auf eine solche Weise zu bewegen, dass sich die Produkte entlang der Förderrichtung (2) vorwärts bewegen;
- eine Vielzahl von Stützrollen (22), die unter dem Fördergurt (1) zu dessen Abstützung positioniert sind, wobei die Stützrollen (22) parallel zueinander und im Wesentlichen senkrecht zur Förderrichtung (2) verlaufen.

13. Fördergerät (100) nach Anspruch 12, wobei die Stützrollen (22) äquidistant sind.

14. Ofen zum Backen von Produkten, insbesondere von Lebensmittelprodukten, umfassend:
- einen Backraum, der eine Prozesszone für die Produkte definiert, wobei Heizelemente in dem Backraum vorhanden sind;
- ein Fördergerät (100) nach Anspruch 12 oder 13, das derart angeordnet ist, dass es zumindest teilweise durch den Backraum verläuft.

15. Ofen nach Anspruch 14, wobei die Heizelemente Heizkörper und/oder Gebläse sind.

## Revendications

1. Bande de transport (1) pour transporter des produits le long d'une direction de transport (2), comprenant :
- une grille (3) se prolongeant principalement le long d'une direction parallèle à ladite direction de transport (2), ladite grille (3) comprenant deux bords longitudinaux (4), une pluralité de tiges (5) parallèles les unes aux autres et essentiellement perpendiculaires à ladite direction de transport (2) et une pluralité de fils (6) torsadés autour desdites tiges (5) de manière à définir des mailles de la grille (3) ;
- au moins deux chaînes (7), dont chacune est disposée sur l'un des deux bords longitudinaux (4) de la grille (3), chaque chaîne (7) comprenant :
- une pluralité de plaques (9, 10) montées articulées ensemble ;
- des moyens d'arrêt mécaniques (8) répartis le long de ladite chaîne (7) de manière à empêcher la rotation mutuelle de plaques consécutives (9, 10) au-delà d'une position limite prédéfinie,
**caractérisée en ce que** chaque chaîne (7) comprend des plaques d'un premier type (9) et des plaques d'un deuxième type (10) alternativement montées articulées ensemble, lesdits moyens d'arrêt mécaniques (8) étant répartis sur les plaques du premier type (9), chaque plaque du deuxième type (10) comportant des éléments de butée d'extrémité (11) qui, dans ladite position limite prédéfinie, viennent se mettre en butée contre lesdits moyens d'arrêt mécaniques (8) des deux plaques du premier type (9) adjacentes à ladite plaque du deuxième type (10).

2. Bande de transport (1) selon la revendication 1, comprenant plus de deux chaînes (7), essentiellement parallèles entre elles et à ladite direction de transport (2).

3. Bande de transport (1) selon la revendication 2, dans laquelle lesdites chaînes (7) sont équidistantes, c'est-à-dire qu'elles sont disposées à des pas réguliers.

4. Bande de transport (1) selon la revendication 3, dans laquelle le pas entre deux chaînes adjacentes (7) est compris entre 300 et 500 mm.

5. Bande de transport (1) selon la revendication 1, dans laquelle lesdits moyens d'arrêt mécaniques (8) consistent en des saillies (12) obtenues sur chaque plaque du premier type (9).

6. Bande de transport (1) selon la revendication 5, dans laquelle lesdites saillies (12) sont au nombre de deux pour chaque plaque du premier type (9) et sont situées à proximité des extrémités opposées de ladite plaque du premier type (9).

7. Bande de transport (1) selon la revendication 5 ou 6, dans laquelle lesdites saillies (12) sont des languettes ayant une inclinaison comprise entre 90 et 120° par rapport à la plaque correspondante du premier type (9).

8. Bande de transport (1) selon la revendication 1, dans laquelle lesdits moyens d'arrêt mécaniques (8) sont des broches (13) introduites dans des trous traversants correspondants obtenus dans lesdites plaques du premier type (9).

9. Bande de transport (1) selon la revendication 8, dans laquelle lesdites broches (13) sont au nombre de deux pour chaque plaque du premier type (9) et sont introduites respectivement dans deux trous traversants obtenus à proximité des extrémités opposées de ladite plaque du premier type (9).

10. Bande de transport (1) selon l'une quelconque des revendications précédentes, dans laquelle ladite grille (3) est constituée d'un matériau métallique.

11. Bande de transport (1) selon l'une quelconque des revendications précédentes, dans laquelle ladite grille (3) est du type à oeillet.

12. Appareil de transport (100) pour transporter des produits à travers une zone de traitement, comprenant :
- une bande de transport (1) selon l'une quelconque des revendications précédentes ;
- des moyens motorisés (21) actifs de manière fonctionnelle sur ladite bande de transport (1) pour la déplacer de manière à ce que les produits avancent le long de ladite direction de transport (2) ;
- une pluralité de rouleaux de support (22) positionnés en dessous de la bande de transport (1) pour la supporter, lesdits rouleaux de support (22) étant parallèles les uns aux autres et essentiellement perpendiculaires à la direction de transport (2).

13. Appareil de transport (100) selon la revendication 12, dans lequel lesdits rouleaux de support (22) sont équidistants.

14. Four de cuisson de produits, en particulier produits alimentaires, comprenant :
- une chambre de cuisson qui définit une zone d'élaboration des produits, des éléments chauffants étant présents dans ladite chambre de cuisson ;
- un appareil de transport (100) selon la revendication 12 ou 13, disposé de telle sorte qu'il traverse au moins partiellement ladite chambre de cuisson.

15. Four selon la revendication 14, dans lequel lesdits éléments chauffants sont des radiateurs et/ou des souffleurs.
